(19)

Europäisches
Patentamt
European
Patent Office
Office européen
des brevets

(11) **EP 3 041 127 A1**

(12) **EUROPEAN PATENT APPLICATION**
published in accordance with Art. 153(4) EPC

(43) Date of publication:
**06.07.2016 Bulletin 2016/27**

(51) Int Cl.:
***H02M 7/537*** *(2006.01)*     ***H02M 7/49*** *(2007.01)*

(21) Application number: **14893132.2**

(22) Date of filing: **09.06.2014**

(86) International application number:
**PCT/CN2014/079502**

(87) International publication number:
**WO 2015/180204 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.05.2014 CN 201410233072**

(71) Applicant: **Huazhong University of Science and Technology**
**Wuhan, Hubei 430074 (CN)**

(72) Inventors:
• **LIN, Weixing**
**Wuhan**
**Hubei 430074 (CN)**

• **XIANG, Wang**
**Wuhan**
**Hubei 430074 (CN)**
• **WEN, Jinyu**
**Wuhan**
**Hubei 430074 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

(54) **SUBMODULE TOPOLOGY FOR MODULAR MULTI-LEVEL CONVERTER AND APPLICATION THEREOF**

(57)     A sub-module for a modular multi-level converter, a converter comprising the sub-module, and an application thereof. The sub-module comprises a first switching module (1), a second switching module (2), a direct current capacitor (4), and a third switching module (3). The first switching module (1) and the second switching module (2) are connected in series, a negative end of the first switching module (1) is connected to a positive end of the second switching module (2), and the switching modules (1, 2, 3) are each formed by connecting a full-controlled device and a diode in an antiparallel mode. A positive electrode and a negative electrode of the direct current capacitor (4) are connected to a positive end of the first switching module (1) and a negative end of the second switching module (2). The third switching module (3) is electrically connected to the first switching module (1) and the second switching module (2), so that a full-controlled device of the third switching module (3) applies trigger pulse all the time during normal operation and is in a conducting state all the time, and can be locked by locking the trigger pulse of the third switching module (3) when direct current faults occur. By means of the solution, a function of isolating the direct current faults is achieved, quantity and switching losses of fully-controllable devices in the sub-module are decreased, and requirements on trigger simultaneity are reduced.

FIG.5

EP 3 041 127 A1

## Description

## Technical Field

The invention relates to the power transmission and distribution filed, and more particularly, to a sub-module for a modular multi-level converter, as well as a hybrid modular multi-level converter formed by the sub-modules and half-bridge sub-modules.

## Background of the Invention

At present, the high-voltage direct current transmission (HVDC) technology is widely used in the area of renewable energy generation. With further development of the HVDC technology, a multi-terminal direct current transmission (MTDC) technology and a DC power grid technology capable of facilitating multi-power-supply and multi-infeed arrangement have attracted great concern.

A converter is one of the most key techniques for the two-terminal HVDC technology, the multi-terminal HVDC technology, as well as the DC power grid technology. The converter enables AC/DC conversion and vice versa, thereby facilitating AC-DC/DC-AC power transmission. Technologies for AC-DC/DC-AC conversion mainly include a thyristor-based line commutated converter, and a voltage source converter based on a fully-controllable power semiconductors. However, the line commutated converter needs an external AC voltage source to provide commutation voltage thereto in operation. In addition, in a multi-terminal HVDC system based on line commutated converters, cascaded commutation failures are prone to happen, which may cause collapse of the whole system. The voltage source converter based on the fully-controllable power semiconductor can facilitate active/inactive decoupled control, supply power to weak power grids or isolated islands, and easily constitute a MTDC system, and possesses tremendous advantage in improving stability and power-transmission capability of the system. In recent years, DC power transmission using the voltage source converter has been widely used in integration of renewable energy and has achieved great development.

However, with continuous increase of capacity of new renewable energy, the HVDC system needs to transmit more and more electric energy. It is expected that to the year 2015, typical voltage and power ratings of the voltage source converter are respectively ±320kV and 1000MW, which puts forward higher requirement on the voltage source converter. Limited by power rating of the fully-controllable device, a conventional two-level voltage source converter cannot easily facilitate transmission of high-voltage and high-power electric energy.

With further development of the voltage source converter technology, a new technology named 'modular multi-level converter (MMC)' appears, it features very small harmonic distortion for AC output voltage, modular structure for easy packaging, smaller electrical stress experienced by switching devices, low switching loss and so on, and can facilitate high-voltage and high-power transmission. The modular multi-level converter is divided into a half-bridge type, a full-bridge type, and a clamped type according to a sub-module thereof.

Amongst the three types of converters, a modular multi-level converter employing the half-bridge type sub-module is the most commonly used one, and has been intensively studied by academic and industrial circles, and widely used. In 2010, a first MMC-HVDC system in the world - the American Trans Bay Cable project using the half-bridge MMC technology is put into commercial operation. MMC projects that are put into use in China are a demonstration project in Nanhui, Shanghai, as well as a three-terminal flexible HVDC project in Nanao, Guangdong. A five-terminal HVDC project in Zhoushan, Zhejiang is under construction, and a two-terminal flexible HVDC project in Xiamen is on the stage of planning. All the projects employ the half-bridge MMC technique.

Most of the above-mentioned MMC-HVDC projects employ DC cables to reduce the probability of DC faults, but construction cost thereof is high, and economic benefit thereof is poor. In a multi-terminal HVDC system and a DC power grid, DC fault that has significant impact on device parameters, control strategy and protection configuration, is a type of severe fault that must be taken into account during project design and operation. However, due to the absence of mature DC circuit breaker, disconnection from an AC system can only be facilitated by using a AC-side device, such as an AC circuit breaker, an AC fuse and so on, but this method features a low response speed, complex interoperation timing during restarting, and long recovery time. An effective solution is to facilitate self-clearing of the DC fault by self-control of the converter without any operation of mechanical devices, and the solution features a high recovery speed. With introduction of overhead power transmission line technology and tripole DC transmission technology, a modular multi-level converter capable of cutting off DC fault current attracts more and more attention.

The full-bridge type sub-module and the clamped double sub-module both have the capability of isolating the DC fault since sub-module used thereby are special. However, compared with the half-bridge type sub-module, the full-bridge type sub-module and the clamped double sub-module use more fully-controllable power semiconductor for isolating DC fault. Under the same voltage and power output level, the number of fully-controllable power semiconductors used by the full-bridge type sub-module doubles that of the half-bridge type sub-module, which significantly increases cost of the MMC. A sub-module of the clamped double sub-module contains two capacitors, thus the number of fully-controllable power semiconductors thereof is 25% more than that of the half-bridge type sub-module, which increases control complexity of the system, and difficulty in packaging and designing the sub-module.

To solve the problem with the converter capable of isolating the DC fault that there are too many fully-controllable power semiconductors, one solution is to connect the clamped type sub-module to the half-bridge type sub-module in series thereby forming a hybrid modular multi-level converter. The hybrid modular multi-level converter can effectively isolate DC fault after DC fault occurs, and meanwhile, the number of fully-controllable power semiconductor used thereby is only 17.5% more than that of the half-bridge type sub-module. However, as far as the hybrid modular multi-level converter is concerned, if DC fault occurs, the capacitor of the clamped type sub-module is always in a charging state, which may lead to excessive voltage thereof. At the time, a damping resistor has to be added to the clamped double sub-module for dissipating surplus energy, which may increase size and weight of the sub-module, and need a heat radiator, and thus increasing difficulty in producing and designing the sub-module, as well as cost thereof.

**Summary of the invention**

In view of the above-mentioned problems, it is an objective of the invention to provide a sub-module for a modular multi-level converter capable of blocking DC fault current. Superior to a sub-module capable of blocking DC fault current in the prior art, the topology of invention can reduce the number of fully-controllable power semiconductors in the sub-module and difficulty in fabricating the sub-module, and multiple topologies of the invention can form a modular multi-level converter with a DC fault isolation function.

In accordance with an aspect of the invention, provided is a sub-module for a modular multi-level converter, comprising:

a first switching module and a second switching module connected in series to each other, a negative terminal of the first switching module being connected to a positive terminal of the second switching module;
a DC capacitor, a positive electrode and a negative electrode thereof being respectively connected to a positive terminal of the first switching module and a negative terminal of the second switching module;
the topology further comprises a third switching module electrically connected to the first switching module and the second switching module, trigger pulse is continuously applied to a fully-controllable device of the third half-bridge switching module so that the device maintains in a switched-on state during normal operation, and DC fault current is blocked by blocking the trigger pulse applied to the third switching module as DC fault occurs.

In a class of this embodiment, a negative terminal of the third switching module is connected to a negative terminal of the second switching module, a positive terminal of the third switching module operates as an output negative terminal of the sub-module, and a connection point between the first switching module and the second switching module operates as an output positive terminal of the sub-module.

In a class of this embodiment, the topology further comprises a fourth diode, an anode thereof being connected to the positive terminal of the third switching module, a cathode thereof being connected to the positive electrode of the DC capacitor.

In a class of this embodiment, the positive terminal of the third switching module is connected to the connection point between the first switching module and the second switching module; the negative terminal of the third switching module operates as the output positive terminal of the sub-module; and the negative terminal of the second switching module operates as the output negative terminal of the sub-module

In a class of this embodiment, the negative terminal of the third switching module is connected to the connection point between the first switching module and the second switching module; the positive terminal of the third switching module operates as the output negative terminal of the sub-module; and the positive terminal of the first switching module operates as the output positive terminal of the sub-module

In a class of this embodiment, the positive terminal of the third switching module is connected to the positive terminal of the first switching module; the negative terminal of the third switching module operates as the output positive terminal of the sub-module; and the connection point between the first switching module and the second switching module operates as the output negative terminal of the sub-module.

In a class of this embodiment, the topology further comprises a fourth diode, an anode thereof being connected to the negative terminal of the DC capacitor, a cathode thereof being connected to the negative electrode of the third switching module.

In a class of this embodiment, the fully-controllable device may be an insulated gate bipolar transistor (IGBT), an integrated gate commutated thyristor (IGCT), or a gate turn-off thyristor (GTO)

In accordance with another aspect of the invention, provided is a modular multi-level converter, comprising one more phase units, each of the phase unitss comprising an upper arm and a lower arm connected in series to each other, and a pair of arm inductors respectively connected to the upper arm and the lower arm in series, a positive terminal of the upper arm and a negative terminal of the lower arm are respectively connected to a positive electrode and a negative electrode of a DC bus; a connection point between the negative terminal of the upper arm and the positive terminal of the lower arm of each phase unit operates as a lead-out point for three-phase output terminals; and the upper arm or the lower arm is formed by multiple above-mentioned sub-modules.

In accordance with a still another aspect of the invention, provided is a hybrid modular multi-level converter, comprising one more phase units, each of the phase units comprising an upper arm and a lower arm connected in series to each other, and a pair of arm inductors respectively connected to the upper arm and the lower arm in series, a positive terminal of the upper arm and a negative terminal of the lower arm are respectively connected to a positive electrode and a negative electrode of a DC bus; a connection point between the negative terminal of the upper arm and the positive terminal of the lower arm of each phase unit operates as a lead-out point for three-phase output terminals; and the upper arm or the lower arm is formed by multiple above-mentioned sub-modules, and multiple half-bridge sub-modules mixedly connected in series to each other.

In a class of this embodiment, the number of the sub-modules in the upper arm or the lower arm is the same as that of the half-bridge sub-modules therein.

In accordance with a further aspect of the invention, provided is a method for blocking DC fault current during DC fault using the above-mentioned modular multi-level converter, comprising: blocking the trigger pulse applied to the third switching module of the sub-module, thereby disconnecting a path of supplying the DC fault current to a DC side by an AC side.

In a class of this embodiment, the DC fault is detected by determining whether the DC current exceeds a threshold value, or whether a rising rate of the DC current exceeds another threshold value.

In a class of this embodiment, the DC fault is DC-side permanent fault, and the process of cutting off the DC fault current comprises: blocking trigger pulse applied to all fully-controllable devices thereby isolating the DC fault, switching off a AC-side circuit breaker, and charging and restoring operation of the system after DC fault being cleared.

In a class of this embodiment, the DC fault is temporary fault, and the process of blocking the DC fault current comprises: blocking trigger pulse applied to all the fully-controllable device thereby isolating the DC fault, de-blocking the trigger pulse applied to all fully-controllable devices of the third switching module in each sub-module so that an AC side charges a DC line after DC arc is extinguished, and finally de-blocking all remaining fully-controllable devices for subsequent stable operation.

The hybrid modular multi-level converter of the invention can significantly reduce the number of fully-controllable power semiconductor, and is capable of isolating the DC fault current by increasing the number of fully-controllable power semiconductor of the conventional half-bridge type sub-module by approximately 25%.

In the sub-module for a modular multi-level converter of the invention, the sub-module is formed by the three switching modules, the DC capacitor, the output positive terminal, and the output negative terminal electrically connected to each other, and each switching module is formed by the fully-controllable device and the diode reversely connected in parallel. A connection point between a collector of the fully-controllable device and a cathode of the diode operates as a positive terminal of the switching module, and a connection point between an emitter of the fully-controllable device and an anode of the diode operates as a negative terminal of the switching module.

In the present invention, the first switching module is connected to the second switching module in series, the negative terminal of the first switching module is connected to the positive terminal of the second switching module, and the positive electrode of the DC capacitor and the negative electrode thereof are respectively connected to the positive terminal of the first switching module and the negative terminal of the second switching module, thereby facilitating connection of the DC capacitor, the first switching module and the second switching module. If the output positive terminal of the sub-module and the output negative terminal of the sub-module are, respectively, connected to the connection point between the first switching module and the second switching module and the negative terminal of the second switching module, thus a typical half-bridge sub-modular topology with no capability of cutting off the DC fault current is formed.

To enable the sub-module of the invention to have the capability of blocking the DC fault current, the negative terminal of the third switching module is connected to the negative terminal of the second switching module, and the output positive terminal and output negative terminal of the sub-module are, respectively, connected to the connection point between the first switching module and the second switching module and the positive terminal of the third swiching module. During normal operation of the invention, the fully-controllable device of the third switching module is always applied with trigger pulse and is always in a switched-on state, so that the invention operates as a conventional half-bridge type sub-module normal operation. If DC fault occurs, the invention is capable of cutting off the DC fault current by blocking the trigger pulse applied to the third switching module.

In the present invention, the positive terminal of the third switching module is connected to the connection point between the first switching module and the second switching module, and the output positive terminal of the sub-module and the output negative terminal thereof are respectively led out from the negative terminal of the third switching module and the negative electrode of the DC capacitor.

In the present invention, the negative terminal of the third switching module is connected to the connection point between the first switching module and the second switching module, and the output positive terminal of the sub-module and the output negative terminal thereof are respectively led out from the positive electrode of the DC capacitor and the positive terminal of the third switching module.

In the present invention, the positive terminal of the third switching module is connected to the positive electrode of the DC capacitor, and the output positive terminal of the sub-module and the output negative terminal thereof are respectively led out from the negative terminal of the third switching module and the connection point between the first switching module and the second switching module e.

In the present invention, as the DC fault occurs, it is possible to block the DC fault current by blocking the trigger pulse applied to the third switching module. However, as voltage level of the MMC is comparatively high, requirement for simultaneity of blocking the trigger pulses applied to all the third switching modules is also high, otherwise a fully-controllable device of a third switching module of one sub-module that is previously blocked is to bear all AC voltage and be burned due to non-simultaneity among different third switching modules. To reduce the requirement for simultaneity, the fourth diode can be added to overcome the above-mentioned deficiency.

Specifically, the anode of the fourth diode is connected to the positive terminal of the third switching module, and the cathode of the fourth diode is connected to the positive electrode of the DC capacitor. The new-added fourth diode has no impact on normal operation of the sub-module. As DC fault occurs, if fault current flows from the output positive terminal of the sub-module, the fault current passes through the antiparallel connected diode of the first switching module, and flows out from antiparallel connected diode of the third switching module via the DC capacitor, the voltage drop born by the fully-controllable device of the third switching module is nearly zero; if the fault current flows from the output negative terminal of the sub-module, the fault current passes through the fourth diode, the DC capacitor, and the antiparallel connected diode of the second switching module, voltage born by the fully-controllable device of the third switching module is clamped to the capacitor voltage. The above-mentioned two scenarios will not cause the fully-controllable device in the third switching module to be burned due to non-simultaneity among different switching modules, which reduces the requirement for simultaneity of trigger pulse.

In addition, the anode of the fourth diode can be connected to the negative terminal of the DC capacitor, and the cathode of the fourth diode can be connected to the negative terminal of the third switching module, thereby reducing the requirement for simultaneity of trigger pulse.

In the present invention, one type of connection of each phase unit is that, an terminal of an upper arm inductorinductor is connected to a positive DC bus, the other terminal of the upper arm inductorinductor is connected to a positive terminal of the upper arm, a negative terminal of the upper arm is connected to a positive terminal of a lower arm, a negative terminal of the lower arm is connected to a terminal of a lower arm inductor, the other terminal of the lower arm inductor is connected to a negative DC bus, and a three-phase output terminal is led out from a connection point between the negative terminal of the upper arm and the positive terminal of the lower arm of each phase unit.

Another type of connection of each phase unit is that, the positive terminal of the upper arm is connected to the positive DC bus, the negative terminal of the upper arm is connected to an terminal of the upper arm inductor, the other terminal of the upper arm inductor is connected to an terminal of the lower arm inductor, the other terminal of the lower arm inductor is connected to the positive terminal of the lower arm, the negative terminal of the lower arm is connected to the negative DC bus, and a three-phase output terminal is led out from a connection point between the upper arm inductor and the lower arm inductor of each phase unit.

Furthermore, the modular multi-level converter may include one or more phase units forming a single-phase or multi-phase modular multi-level converter.

Furthermore, the invention also provides a hybrid modular multi-level converter formed by the above-mentioned sub-module and conventional half-bridge sub-modules. In details, a part of sub-modules of each bridge arm of the modular multi-level converter are replaced by conventional half-bridge sub-modules, so as to reduce the number of the invented sub-modules, and thus cost of the converter.

Furthermore, a percentage between the number of conventional half-bridge sub-modules in each arm of the hybrid modular multi-level converter and that of the above-mentioned sub-module is 1:1, so as to reduce the number of fully-controllable devices added for blocking the DC fault current. The percentage of 1:1 indicates that the hybrid modular multi-level converter can have the capability of blocking the DC fault current with only 25% increase of the used fully-controllable devices compared with a modular multilevel converter that is constructed by conventional half-bridge sub-modules.

Furthermore, the invention also provides a method for blocking the DC fault current DC fault using the above-mentioned modular multi-level converter or hybrid modular multi-level converter formed by the above-mentioned sub-modules, comprising: blocking the trigger pulse applied to the third switching module of the sub-module, thereby disconnecting a path of supplying the DC fault current to a DC side by an AC side and thus cutting off the DC fault current.

Furthermore, as DC fault occurs, the single-phase, three-phase or multi-phase modular multi-level converter formed by the sub-modules can isolate the DC fault by taking the following steps:

(for DC-side permanent fault)

1. detecting whether DC fault occurs by determining whether DC current exceeds a threshold value, or whether a rising rate of the DC current exceeds another threshold value;

2. blocking trigger pulse applied to all fully-controllable power semiconductors thereby isolating the DC fault if DC fault occurs; and

3. switching off a AC-side circuit breaker, and charging and charging and restoring system operation after isolation of DC fault occurs

(for DC-side temporary fault)

1. detecting whether DC fault occurs by determining whether the DC current exceeds a threshold value, or whether a rising rate of the DC current exceeds another threshold value;

2. Blocking trigger pulse applied to all fully-controllable power semiconductors thereby isolating the DC fault if DC fault occurs;

3. De-blocking the trigger pulse applied to all fully-controllable power semiconductors of the third switching module in each sub-module so that an AC side charges a DC line after DC arc is extinguished; and

4. De-blocking all remaining fully-controllable power semiconductors for subsequent stable operation.

To summarize, advantages of the invention over the prior art comprise: the sub-module of the invention can facilitate isolation of DC fault; moreover, compared with the full-bridge type sub-module, clamped double sub-module type and diode-clamped type, the invention reduces the number of fully-controllable power devices and switching loss, as well as difficulty in topology designing and industrial application.

**Brief description of accompanying drawings**

FIG. 1 is a schematic diagram of a conventional half-bridge type sub-module;

FIG. 2 is a schematic diagram of a conventional full-bridge type sub-module;

FIG. 3 is a schematic diagram of a conventional clamped double sub-module;

FIG. 4 is a schematic diagram of a diode-clamped type sub-module;

FIG. 5 is a schematic diagram of a sub-module for a modular multi-level converter of a first exemplary embodiment of the invention;

FIG. 6 is a schematic diagram of a sub-module for a modular multi-level converter of a second exemplary embodiment of the invention;

FIG. 7 is a schematic diagram of a sub-module for a modular multi-level converter of a third exemplary embodiment of the invention;

FIG. 8 is a schematic diagram of a sub-module for a modular multi-level converter of a fourth exemplary embodiment of the invention;

FIG. 9 is a schematic diagram of a sub-module for a modular multi-level converter of a fifth exemplary embodiment of the invention;

FIG. 10 is a schematic diagram of a sub-module for a modular multi-level converter of a sixth exemplary embodiment of the invention;

FIG. 11 is a schematic diagram of a three-phase modular multi-level converter formed by sub-modules of any one of the first embodiment to the sixth embodiment of the invention;

FIG. 12 is a schematic diagram of another three-phase modular multi-level converter formed by sub-modules of any one of the first embodiment to the sixth embodiment of the invention;

FIG. 13 is a schematic diagram of a three-phase hybrid modular multi-level converter formed by the sub-modules of the invention and conventional half-bridge type sub-modules;

FIG. 14 illustrates simulation results of a three-phase nine-level modular multi-level converter formed by the sub-modules of the invention;

FIG. 15 is a simplified schematic diagram of the modular multi-level converter of FIG. 14;

FIG. 16 is an equivalent circuit diagram of a three-phase modular multi-level converter at the moment an IGBT is blocked as DC fault occurs

FIG. 17 illustrates simulation results of capacitor voltages of the sub-modules of the three-phase nine-level modular multi-level converter of the invention; and

FIG. 18 illustrates simulation results of current of an upper arm of the three-phase nine-level modular multi-level converter of the invention.

**Specific embodiments of the invention**

For clear understanding of the objectives, features and advantages of the invention, detailed description of the invention will be given below in conjunction with accompanying drawings and specific embodiments. It should be noted that the embodiments are only meant to explain the invention, and not to limit the scope of the invention

A sub-module for a modular multi-level converter of the invention enables the modular multi-level converter to be used for two-terminal HVDC transmission, multi-terminal HVDC transmission, as well as DC power grids, and advantages of the modular multi-level converter of the invention over a conventional half-bridge type modular multi-level converter without capability of cutting off DC fault current are that it can have the ability of cutting off the DC fault current by increasing the number of fully-controllable devices by 25% only. In addition, compared with a full-bridge type MMC and clamped double sub-module type MMC, the converter of the invention features reduced number of sub-modules and lower switching loss, and is easier for engineering design and implementation.

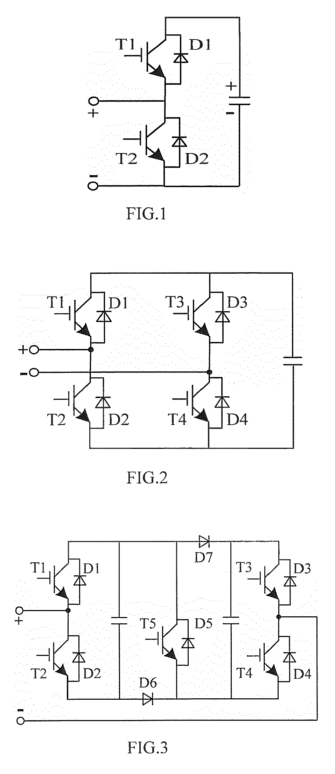

FIG. 1 illustrates a conventional half-bridge type sub-module. As DC fault occurs, an AC system connected to a converter supplies power to the DC fault current via a diode D2. At the time, DC arc can hardly be extinguished, the AC system is in a short-circuit state, and the diode D2 may be burned due to high DC fault current flowing there through. Therefore, an AC-side switch has to be disconnected for cutting off the DC fault current, which may significantly delay recovery time of supplying power by the AC system.

FIG. 2 illustrates a conventional full-bridge type sub-module with capability of cutting off DC fault current. It can be apparently seen from FIGS. 1 and 2 that the number of fully-controllable devices employed by the full-bridge type sub-module doubles that of the half-bridge type sub-module, which greatly increases cost.

FIG. 3 illustrates a conventional clamped double sub-module that blocks all fully-controllable devices as DC fault occurs, and there are two discharging paths for the clamped double sub-module DC fault. Since a sum of DC capacitor voltage of two paths is greater than a magnitude of line voltage of an AC system, a diode is to be reversely blocked, and thus the DC fault is isolated. However, the clamped double sub-module uses many semiconductor devices, which increases difficulty process design. Meanwhile, after the diode is blocked, energy stored by a DC network is mainly absorbed by a capacitor of the sub-module, over-high energy may cause significant increase in the capacitor voltage of the sub-module, and resulting over-voltage may burn the semiconductor devices.

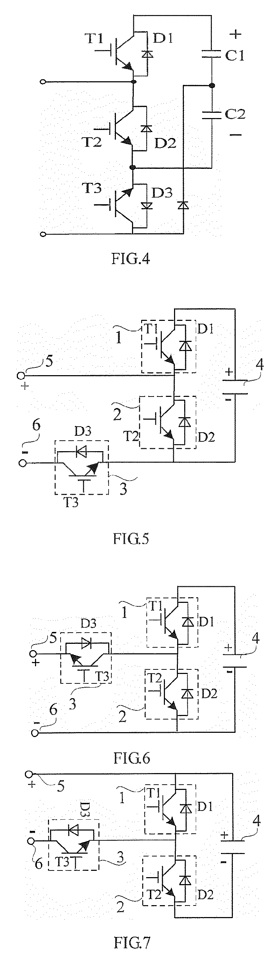

FIG. 4 illustrates a diode-clamped type sub-module comprising three IGBTs and two DC capacitors for isolating DC fault by a diode's clamping, But since the sub-module uses two capacitors, size of the sub-module and design cost are increased.

FIG. 5 illustrates a sub-module for a modular multi-level converter of a first exemplary embodiment of the invention. The sub-module comprises three switching modules 1-3, a DC capacitor 4, an output positive terminal 5 and an output negative terminal 6. Each switching module comprises fully-controllable device (T1 T2, T3) and diodes (D1, D2, D3) reversely connected in parallel.

A connection point between a collector of the fully-controllable device and a cathode of the diode operates as a positive terminal of the switching module, and a connection point between an emitter of the fully-controllable device and an anode of the diode operates as a negative terminal of the switching module. A positive electrode of the DC capacitor 4 and a negative electrode thereof are respectively connected to a positive terminal of the first switching module 1 and a negative terminal of the second switching module 2, a negative terminal of the first switching module 1 is connected to a positive terminal of the second switching module 2, thereby facilitating connection of the DC capacitor 4, the first switching module 1 and the second switching module 2. If the output positive terminal 5 and the output negative terminal 6 are respectively led out from the connection point between the first switching module and the second switching module, and the negative terminal of the second switching module 2, a typical half-bridge type sub-module identical to FIG. 1 is formed, and the sub-module does not have capability of cutting off DC fault current.

In this embodiment, to enable the sub-module to have the capability of cutting the DC fault current, the negative terminal of the third switching module 3 is connected to the negative terminal of the second switching module 2, and the output positive terminal 5 and the output negative terminal 6 are respectively connected to the connection point between the first switching module 1 and the second switching module 2, and the positive terminal of the third switching module 3. In normal operation, the trigger pulse is continuously applied to the fully-controllable device of the third switching module 3, so that the sub-module of the invention operates as a conventional half-bridge type sub-module. As DC fault occurs, it is possible to block a path of the DC fault current by blocking the trigger pulse applied to the third switching module 3.

FIG. 6 illustrates a sub-module for a modular multi-level converter of a second exemplary embodiment of the invention, which differs from the first exemplary embodiment in that a positive terminal of the third switching module 3 is connected to the negative terminal of the first switching module 1, and the output positive terminal 5 and the output negative terminal 6 are respectively led out from the negative terminal of the third switching module 3 and the negative electrode of the DC capacitor 4 (the negative terminal of the second switching module 2).

FIG. 7 illustrates a sub-module for a modular multi-level converter of a third exemplary embodiment of the invention, which differs from the first exemplary embodiment in that the negative terminal of the third switching module 3 is connected to the negative terminal of the first switching module 1 (a connection point there between is also that between the first switching module 1 and the second switching module 2), and the output positive terminal 5 and the output negative terminal 6 are respectively led out from the positive electrode of the DC capacitor 4 (the positive electrode of the first switching module 1) and the positive terminal of the third switching module 3.

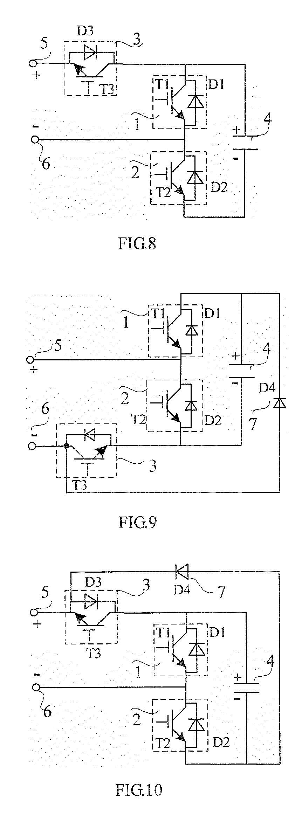

FIG. 8 illustrates a sub-module for a modular multi-level converter of a fourth exemplary embodiment of the invention, which differs from the first exemplary embodiment in that the positive terminal of the third switching module 3 is connected to the positive electrode of the DC capacitor 4 (the positive electrode of the first switching module 1), and the output positive terminal 5 and the output negative terminal 6 are respectively led out from the negative terminal of the third switching module 3 and the negative terminal of the first switching module 1.

As DC fault occurs, the modular multi-level converter of each of above-mentioned four embodiments requires high simultaneity among trigger pulse applied to fully-controllable devices of the third switching modules 3 of all arms, otherwise a fully-controllable device of a third switching module of one sub-module that is previously blocked is to bear all AC voltage and be burned due to non-simultaneity among different third switching modules 3. To reduce the requirement for simultaneity and enable the invention to be better applied to high-level modular multi-level converter, a fourth diode can be added to form a new solution. FIG. 9 illustrates a sub-module for a modular multi-level converter of a fifth exemplary embodiment of the invention, which differs from the first exemplary embodiment in that a fourth diode 7 is added. An anode of the diode 7 is connected to the positive terminal of the third switching module 3, a cathode of the diode 7 is connected to the positive electrode of the DC capacitor 4 (the positive electrode of the first switching module 1).

The new-added fourth diode 7 has no impact on normal operation of the sub-module. As DC fault occurs, if fault current flows into the sub-module from the output positive terminal 5 of the sub-module, the fault current passes through the antiparallel diode of the first switching module, and flows out from the antiparallel diode of the third switching module 3 via the DC capacitor 4, the voltage drop experienced by the fully-controllable device of the third switching module is nearly zero; if the fault current flows from the output negative terminal 6 of the sub-module, the fault current passes through the fourth diode 7, the DC capacitor 4, and the antiparallel diode of the second switching module 2, voltage experienced by the fully-controllable device of the third switching module 3 is clamped to the capacitor voltage. The above-mentioned two scenarios will not cause the fully-controllable device in the third switching module 3 to be burned due to non-simultaneity of blocking the trigger pulses among different switching modules, which reduces the requirement for simultaneity of trigger pulses.

FIG. 10 illustrates a sub-module for a modular multi-level converter of a sixth exemplary embodiment of the invention, which differs from the fourth exemplary embodiment in that a new diode 7 is added. An anode of the diode 7 is connected to the negative terminal of the DC capacitor 4, and a cathode of the diode 7 is connected to the negative terminal of the third switching module 3.

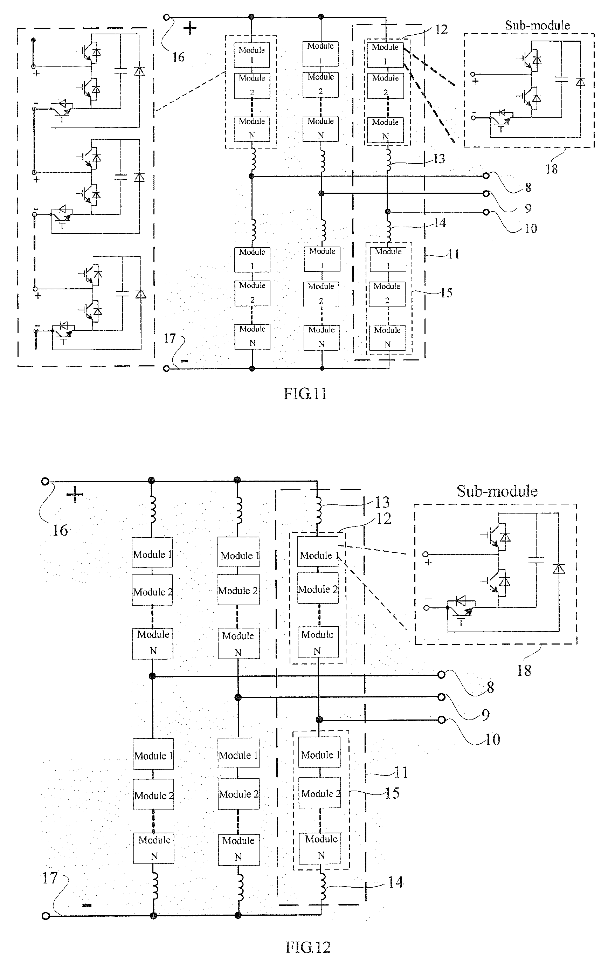

FIG. 11 illustrates a three-phase modular multi-level converter formed by above-mentioned sub-module. The three-phase modular multi-level converter comprises three phase units 11, each phase unit 11 comprises an upper arm 12, an upper arm inductor 13, a lower arm inductor 14, and a lower arm 15 sequentially connected to each other in series, and each arm comprises N sub-modules sequentially connected to each other in series. A positive terminal of each phase unit 11 is connected to a positive DC bus 16, a negative terminal of the phase unit 11 is connected to a negative DC bus 17, and multiple AC output terminals 8-10 are led out from connection points between the upper arm inductor and the lower arm inductor. Detailed connection of each arm is illustrated in the left part of FIG. 11.

FIG. 12 illustrates another three-phase modular multi-level converter formed by above-mentioned sub-module, which is almost the same as FIG. 11, except that connection order of arms and arm inductors forming each phase unit is different. The three-phase modular multi-level converter comprises three phase units 11, each phase unit comprises an upper arm inductor 13, an upper arm 12, a lower arm 15, and a lower arm inductor 14 sequentially connected to each other in series. Multiple AC output terminals 8-10 are led out from connection points between the upper arm and the lower arm. Other components of this embodiment are almost identical to those in FIG. 11, and will not be repeated hereinafter.

In the present invention, based on transmission power of the modular multi-level converter, the modular multi-level converter can be a single-phase or multi-phase modular multi-level converter formed by one or more phase units, and the number of phase units is not limited to that in FIGS. 10 and 12.

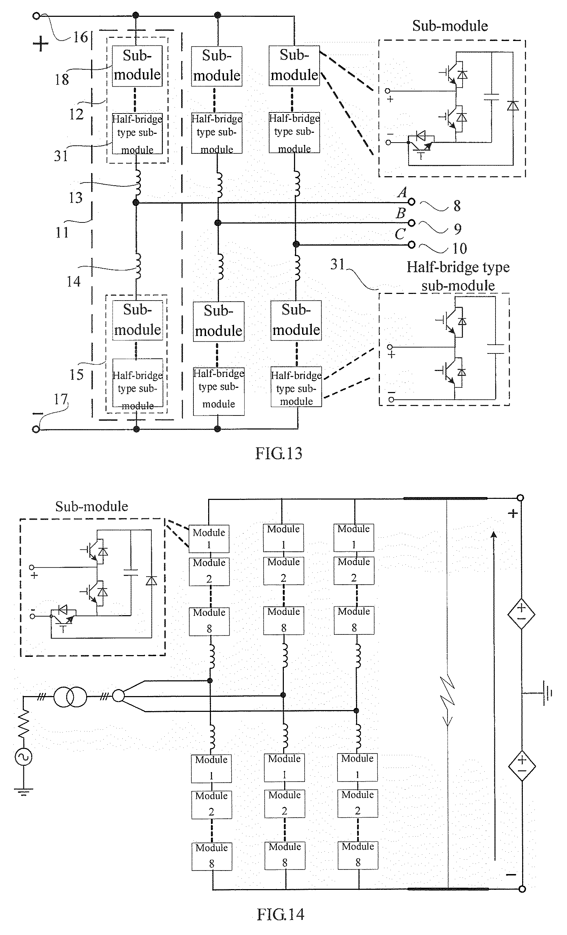

FIG. 13 illustrates a hybrid modular multi-level converter formed by the sub-module of the invention and a conventional half-bridge type sub-module. The converter in FIG. 13 is almost identical to that in FIG. 11, except that each of the arms 12 and 15 is formed by multiple sub-modules and conventional half-bridge type sub-modules connected in series, and the sub-modules and the conventional half-bridge type sub-modules can be connected in any order. The sub-module can be any one of the above-mentioned first embodiment to sixth embodiment.

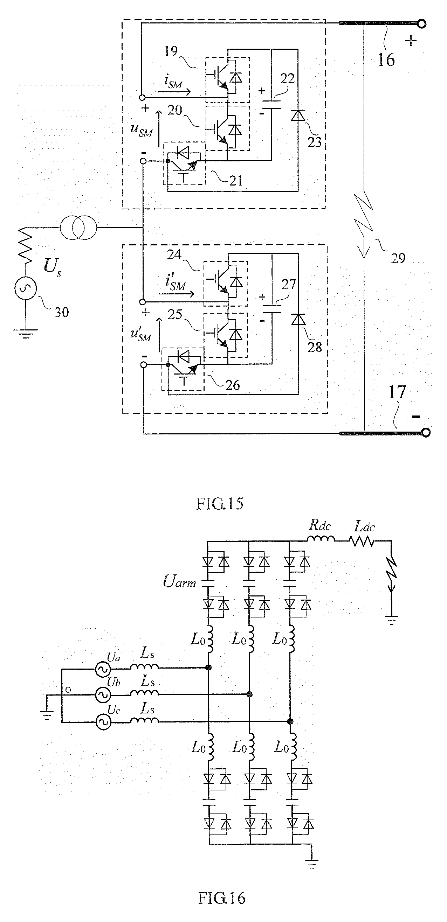

Preferably, a percentage between the number of the above-mentioned sub-modules of the invention and that of conventional half-bridge sub-modules is 1:1, so as to cut off the DC fault current by blocking all trigger pulse applied to all sub-modules as DC fault occurs, and to ensure the third switching module 3 of the sub-module is not to be burned by over voltage by selecting the appropriate number of sub-modules. FIG. 14 illustrates simulation results of a three-phase nine-level modular multi-level converter formed by the sub-module of the invention. For the purpose of clear explanation, one phase in FIG. 14 is selected for analysis, and eight sub-modules of the upper arm and the lower arm are equivalent as one sub-module, as shown in FIG. 15. Capacitors 22 and 28 respectively represent equivalent serially-connected capacitors of the upper arm and those of the lower arm, and capacitor voltage thereof is respectively the sum of capacitor voltage of all sub-modules of the upper arm, and that of capacitor voltage of all sub-modules of the lower arm. If pole-to-pole short circuit occurs at the DC side, fully-controllable devices in the switching modules 19, 20, 21, 24, 25 and 26 are blocked. Assuming the DC fault current flows from the AC side to the DC side, as IGBT of the upper arm is blocked, the fault current can only flow via the diode 23, the capacitor 22 and a antiparallel diode in the switching module 20, the sum of capacitor voltage of the upper arm remains near DC voltage $U_{dc}$, and the magnitude of phase voltage at the AC side is less than $U_{dc}$. The diode cannot conduct since reverse voltage is applied thereon, the upper arm does not have a conductive path, and the lower arm, antiparallel diodes in the switching modules 24 and 26, and the capacitor 27 form a conductive path. However, since the sum of capacitor voltage of the lower arm remains near DC voltage $U_{dc}$, and the magnitude of the phase voltage at the AC side is less than $U_{dc}$, therefore the diode cannot conduct since reverse voltage is applied thereon, and the lower arm does not have a conductive path.

Assuming the DC fault current flows from the DC side to the AC side, the fault current may flow via the capacitor 22, and antiparallel diodes in the switching modules 19 and 21, and the sum of capacitor voltage of the upper arm remains near DC voltage $U_{dc}$. The diode cannot be conduct since reverse voltage is applied thereon, the upper arm does not have a conductive path, the DC fault current of the lower arm may flow via antiparallel diodes in the switching module 24, the capacitor 27 and the diode 28. However, since the sum of capacitor voltage of the lower arm remains near DC voltage $U_{dc}$, the diode cannot conduct since reverse voltage is applied thereon, and the lower arm does not have a conductive path. Therefore, an AC power supply 30 cannot provide short-circuit current for a fault point, and thus the DC fault is isolated.

FIG. 16 illustrates an equivalent circuit of a three-phase modular multi-level converter at the moment the converter is blocked when DC fault occurs. Denote $U_m$ as the voltage magnitude of the three-phase power supply (namely the peak phase to ground voltage), $U_c$ represents a rated capacitor voltage of a sub-module, $N$ represents the number of sub-modules on each arm, $U_{arm}$ represents the sum of capacitor voltage of all sub-modules on each arm, $U_{arm}=N*U_c$. To isolate DC fault, the following equation needs to be satisfied:

$$U_m < U_{arm} \qquad (1)$$

Denote the voltage modulation index of the converter as M, then

$$M = \frac{U_m}{\frac{1}{2}U_{dc}} \qquad (2)$$

During normal operation of the converter, the voltage modulation ratio M < 1, then

$$U_m < \frac{1}{2}U_{dc} \qquad (3)$$

However, DC-side voltage $U_{dc}$ is equal to the sum of rated capacitor voltage of N sub-modules, namely

$$\frac{1}{2}U_{dc} = \frac{1}{2}*NU_c = \frac{N}{2}*U_c \qquad (4)$$

It can be known from equations (1) and (4) that arm of each phase can isolate DC fault by using only N/2 sub-modules. Therefore, in the hybrid modular multi-level converter as shown in FIG. 13, a percentage between the number of sub-modules and that of conventional half-bridge type sub-modules is preferably 1:1.

To test technical feasibility of the invention, well acknowledged HDVC simulation software PSCAD/EMTDC is used for testing simulation results of the invention.

In simulation, each component employs a detailed model provided by the standard model library in PSCAD/EMTDC. A rated capacity of the system is 1000MVA, rated AC voltage thereof is 230kV, DC voltage is 200kV, capacitance of the sub-module is 3000 μF, arm inductance is 0.0154H, and each of the upper arm and the lower arm has eight sub-modules.

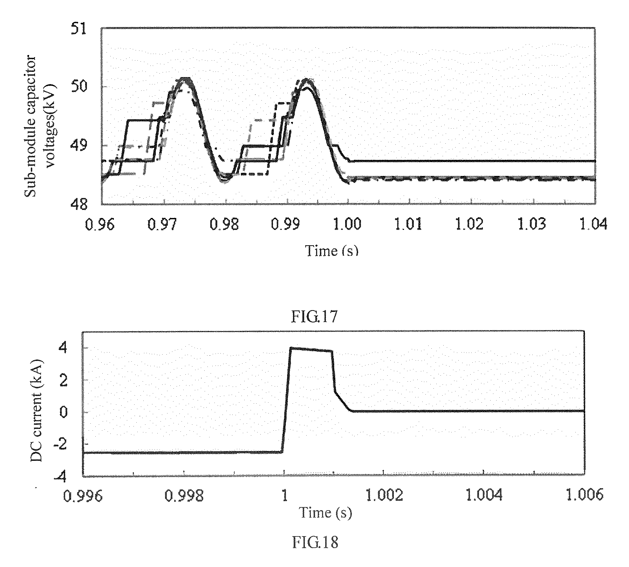

Simulation results are illustrated in FIGS. 17 and 18, in which FIG. 17 illustrates capacitor voltage of the sub-module, and FIG. 18 illustrates DC current. At the simulation time of 1s, permanent pole-to-pole DC short circuit fault occurs at the DC side of the converter. It can be seen from FIG. 17 that, after the DC fault occurs and the trigger pulses applied to the fully-controllable device are blocked, the capacitor voltage of the sub-module almost remains near the rated voltage. It can be seen from FIG. 18 that after DC-side short circuit fault occurs, the DC fault current immediately drops to 0, which can effectively isolate the DC fault.

It should be noted that FIGS. 17 and 18 are mainly used for theoretically verifying the sub-module of the invention, and rated voltage of the sub-module is 50kV. Theory for verifying in FIGS. 17 and 18 can be widely used to a MMC with any voltage level.

The hybrid modular multi-level converter of the invention features capability of isolating DC fault, and the number of sub-modules thereof is only 25% more than that of a conventional half-bridge type MMC without capability of cutting off DC fault current. Compared with a conventional MMC with capability of cutting off the DC fault current, the invention does not need an extra damping resistor, which makes it possible to reduce device cost and difficulty of engineering design, and features great industrial application value. While preferred embodiments of the invention have been described above, the invention is not limited to disclosure in these embodiments and the accompanying drawings. Any changes or modifications without departing from the spirit of the invention fall within the scope of the invention.

**Claims**

1. A sub-module for a modular multi-level converter, comprising:

   a first switching module (1) and a second switching module (2) connected in series to each other, a negative terminal of said first switching module (1) being connected to a positive terminal of said second switching module (2);
   a DC capacitor (4), a positive electrode and a negative electrode thereof being respectively connected to a positive terminal of said first switching module (1) and a negative terminal of said second switching module (2);

   wherein

   said topology further comprises a third switching module (3) electrically connected to said first switching module (1) and said second switching module (2), triggering pulse is continuously applied to a fully-controllable device of said third switching module (3) so that said device maintains in a conduction state during normal operation, and DC fault current is blocked by blocking said triggering pulse applied to said third switching module (3) as DC fault occurs; and
   each of said three switching modules (1,2,3) comprises a fully-controllable device and a diode reversely connected in parallel.

2. The sub-module for a modular multi-level converter of claim 1, wherein a negative terminal of said third switching module (3) is connected to a negative terminal of said second switching module (2), a positive terminal of said third switching module (3) operates as an output negative terminal (6) of said sub-module, and a connection point between said first switching module and said second switching module operates as an output positive terminal (5) of said sub-module.

3. The sub-module for a modular multi-level converter of claim 2, further comprising a fourth diode (7), an anode thereof being connected to said positive terminal of said third switching module (3), a cathode thereof being connected to said positive electrode of said DC capacitor (4) thereby reducing the requirement for simultaneity of said trigger pulse applied to said fully-controllable device of said third switching module (3).

4. The sub-module for a modular multi-level converter of claim 1, wherein

said positive terminal of said third switching module (3) is connected to said connection point between said first switching module (1) and said second switching module (2);
said negative terminal of said third switching module (3) operates as said output positive terminal (5) of said sub-module; and
said negative terminal of said second switching module (2) operates as said output negative terminal (6) of said sub-module.

5. The sub-module for a modular multi-level converter of claim 1, wherein
said negative terminal of said third switching module (3) is connected to said connection point between said first switching module (1) and said second switching module (2);
said positive terminal of said third switching module (3) operates as said output negative terminal (6) of said sub-module; and
said positive terminal of said first switching module (1) operates as said output positive terminal (5) of said sub-module.

6. The sub-module for a modular multi-level converter of claim 1, wherein
said positive terminal of said third switching module (3) is connected to said positive terminal of said first switching module (1);
said negative terminal of said third switching module (3) operates as said output positive terminal (5) of said sub-module; and
said connection point between said first switching module (1) and said second switching module (2) operates as said output negative terminal (6) of said sub-module.

7. The sub-module for a modular multi-level converter of claim 6, further comprising a fourth diode (7), an anode thereof being connected to said negative terminal of said DC capacitor (4), a cathode thereof being connected to said negative electrode of said third switching module (3) thereby reducing the requirement for simultaneity of said trigger pulse applied to said fully-controllable device of said third switching module (3).

8. The sub-module for a modular multi-level converter of any one of claims 1 to 7, wherein said fully-controllable device may be an insulated gate bipolar transistor (IGBT), an integrated gate commutated thyristor (IGCT), or a gate turn-off thyristor (GTO).

9. A modular multi-level converter, comprising one or more phase units (11), each of said phase units (11) comprising an upper arm (12) and a lower arm (15) connected in series to each other, and a pair of arm inductors (13, 14) respectively connected to said upper arm (12) and said lower arm (15) in series, wherein

a positive terminal of said upper arm (12) and a negative terminal of said lower arm (15) are respectively connected to a positive electrode (16) and a negative electrode (17) of a DC bus;
a connection point between said negative terminal of said upper arm (12) and said positive terminal of said lower arm (15) of each phase unit (11) operates as a lead-out point for three-phase output terminals; and
said upper arm (12) or said lower arm (15) is formed by multiple sub-modules of any one of claims 1 to 8.

10. A hybrid modular multi-level converter, comprising one or more phase units (11), each of said phase units (11) comprising an upper arm (12) and a lower arm (15) connected in series to each other, and a pair of arm inductors (13, 14) respectively connected to said upper arm (12) and said lower arm (15) in series, wherein
a positive terminal of said upper arm (12) and a negative terminal of said lower arm (15) are respectively connected to a positive electrode (16) and a negative electrode (17) of a DC bus;
a connection point between said negative terminal of said upper arm (12) and said positive terminal of said lower arm (15) of each phase unit (11) operates as a lead-out point for three-phase output terminals; and
said upper arm (12) or said lower arm (15) is formed by multiple sub-modules of any one of claims 1 to 8, and multiple half-bridge sub-modules mixedly connected in series to each other.

11. The hybrid modular multi-level converter of claim 10, wherein the number of said sub-modules in said upper arm (12) or said lower arm (15) is the same as that of said half-bridge sub-modules therein.

12. A method for blocking DC fault currents DC fault using the modular multi-level converter of any one of claims 9 to 11, comprising: blocking said trigger pulse applied to said third switching module (3) of said sub-module, thereby disconnecting a path of supplying said fault current to a DC side by an AC side.

13. The method of claim 12, wherein said DC fault is detected by determining whether said DC current exceeds a threshold value, or whether a rising rate of said DC current exceeds another threshold value.

14. The method of claim 12 or 13, wherein said DC fault is DC-side permanent fault, and the process of blocking said DC fault current comprises: blocking trigger pulse applied to all the fully-controllable devices thereby isolating said DC fault, switching off the AC circuit breaker, and restoring operation after clearance of DC fault.

15. The method of claim 12 or 13, wherein said DC fault is temporary fault, and the process of blocking said DC fault current comprises: blocking trigger pulse applied to all the said fully-controllable device thereby isolating said DC fault, de-blocking said trigger pulse applied to all fully-controllable devices of said third switching module in each sub-module so that an AC side charges a DC line after DC arc is extinguished, and finally de-blocking all remaining fully-controllable devices for subsequent stable operation.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

# INTERNATIONAL SEARCH REPORT

| | International application No. |
|---|---|
| | PCT/CN2014/079502 |

## A. CLASSIFICATION OF SUBJECT MATTER

H02M 7/537 (2006.01) i; H02M 7/49 (2007.01) i

According to International Patent Classification (IPC) or to both national classification and IPC

## B. FIELDS SEARCHED

Minimum documentation searched (classification system followed by classification symbols)

H02M; G06F

Documentation searched other than minimum documentation to the extent that such documents are included in the fields searched

Electronic data base consulted during the international search (name of data base and, where practicable, search terms used)

CNPAT, CNKI, EPODOC, WPI, GOOGLE: multilevel, converter, DC, fault, latch, block, switch, lock

## C. DOCUMENTS CONSIDERED TO BE RELEVANT

| Category* | Citation of document, with indication, where appropriate, of the relevant passages | Relevant to claim No. |
|---|---|---|
| X | CN 103326608 A (NARI RELAYS ELECTRIC CO., LTD et al.) 25 September 2013 (25.09.2013) description, paragraphs [0007] to [0038], [0044], [0045] and figures 1, 6 and 7 | 1-15 |
| A | CN 102801295 A (ZHUZHOU NAT ENGINEERING RES CT OF CONVERTERS CO., LTD) 28 November 2012 (28.11.2012) the whole document | 1-15 |
| A | CN 103605850 A (STATE GRID CORP CHINA et al.) 26 February 2014 (26.02.2014) the whole document | 1-15 |
| A | CN 102281014 A (ZHEJIANG UNIVERSITY) 14 December 2011 (14.12.2011) the whole document | 1-15 |
| A | WO 2013060354 A1 (SIEMENS AKTIENGESELLSCHAFT et al.) 02 May 2013 (02.05.2013) the whole document | 1-15 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 November 2014 | 08 December 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>GE, Jiawu<br><br>Telephone No. (86-10) 62413332 |

Form PCT/ISA /210 (second sheet) (July 2009)

**INTERNATIONAL SEARCH REPORT**

| International application No. |
| --- |
| PCT/CN2014/079502 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | JP 5478367 B2 (MITSUBISHI ELECTRIC CORP.) 23 April 2014 (23.04.2014) the whole document | 1-15 |

Form PCT/ISA /210 (continuation of second sheet) (July 2009)

**INTERNATIONAL SEARCH REPORT**
Information on patent family members

International application No.

PCT/CN2014/079502

| Patent Documents referred in the Report | Publication Date | Patent Family | Publication Date |
|---|---|---|---|
| CN 103326608 A | 25 September 2013 | None | |
| CN 102801295 A | 28 November 2012 | None | |
| CN 103605850 A | 26 February 2014 | None | |
| CN 102281014 A | 14 December 2011 | CN 102281014 B | 25 September 2013 |
| WO 2013060354 A1 | 02 May 2013 | EP 2756589 A1 | 23 July 2014 |
| JP 5478367 B2 | 23 April 2014 | JP 2011254565 A | 15 December 2011 |

Form PCT/ISA /210 (patent family annex) (July 2009)